# EUROPÄISCHE PATENTSCHRIFT

(11) **EP 3 452 716 B1**
(45) Veröffentlichungstag und Bekanntmachung des Hinweises auf die Patenterteilung: **04.05.2022**
(21) Anmeldenummer: 17714424.3
(22) Anmeldetag: 29.03.2017
(51) Int. Cl.: F02M 26/11, F02D 9/10, F16K 11/052, F02M 26/21, F02M 26/35, F02M 26/64, F02M 26/70

(54) **REGELVORRICHTUNG**
CONTROL DEVICE
DISPOSITIF DE RÉGULATION

(30) Priorität: 06.05.2016 DE 102016108389
(43) Veröffentlichungstag der Anmeldung: 13.03.2019
(73) Patentinhaber: Pierburg GmbH, 41460 Neuss (DE)
(72) Erfinder: DAHLKE, Rainer, 41564 Kaarst (DE); SUTTY, Patrick, 40477 Düsseldorf (DE); FASSBENDER, Ulrich, 41189 Mönchengladbach (DE); KÜBBELER, Jean, 40589 Düsseldorf (DE); REIMERS, Thorsten, 41472 Neuss (DE)
(74) Vertreter: terpatent Patentanwälte ter Smitten Eberlein-Van Hoof Rütten Daubert
(86) Internationale Anmeldenummer: PCT/EP2017/057412
(87) Internationale Veröffentlichungsnummer: WO 2017/190893

(56) Entgegenhaltungen:
- EP-A1- 3 012 445
- DE-A1-102014 222 240
- GB-A- 784 503
- JP-A- H08 291 870
- JP-A- H11 236 830
- JP-A- 2011 074 841

## Beschreibung

Die vorliegende Erfindung betrifft eine Regelvorrichtung für eine Verbrennungskraftmaschine mit einem Ansaugkanal, einem Abgasrückführkanal, der in den Ansaugkanal mündet, einem Gehäuse, in dem der Ansaugkanal und zumindest eine Mündung des Abgasrückführkanals ausgebildet sind, und einer als Drehachse dienenden Welle, die im Gehäuse bezüglich des Luftstroms stromaufwärts der Mündung des Abgasrückführkanals und senkrecht zu den Mittelachsen des Ansaugkanals und des Abgasrückführkanals angeordnet ist. Die Regelvorrichtung umfasst ferner einen Regelkörper, der an der Welle befestigt ist, über die der Regelkörper im Ansaugkanal drehbar ist, wobei der Regelkörper in einer ersten Endstellung den Ansaugkanal zumindest drosselt, und in einer zweiten Endstellung an einem Ventilsitz anliegt, in welcher der Regelkörper den Abgasrückführkanal verschließt.

Regelvorrichtungen werden in Verbrennungskraftmaschinen genutzt, um Abgas- oder Luftmengen zu regeln, die abgeführt oder der Verbrennung zugeführt werden sollen. Auch Kombinationen dieser Regelventile, bei denen zwei Ventilkörper über eine gemeinsame Stellvorrichtung betätigt werden, sind bekannt. Insbesondere wurden Kombinationen eines Abgasrückführventils mit einer Drosselklappe offenbart. Bei diesen Ausführungen mündet der Abgasrückführkanal unmittelbar stromabwärts der als Drosselventil dienenden Klappe in den Luftansaugkanal. Bei gewünschter Erhöhung der Abgasrückführrate wird dann mit Öffnen des Abgasrückführventils in gleichem Maße die Drosselklappe geschlossen, was eine Erhöhung des Druckgefälles im Abgasrückführkanal zur Folge hat, wodurch der Anteil des Abgases im Vergleich zur angesaugten Luftmenge erhöht wird. Eine derartige Anordnung wird beispielsweise in der DE 27 03 687 A1 offenbart.

Aus der DE 20 2014 100 190 U1 ist ebenfalls eine solche Regelvorrichtung bekannt. Die Regelvorrichtung weist eine erste Drosselklappe auf, welche ausgebildet ist, die durch einen Frischlufteinlass einströmende Frischluftmenge zu regeln. An der ersten Drosselklappe ist eine zweite Drosselklappe angeordnet, welche eine aus einem Abgaskanal einströmende Abgasmenge beeinflusst. Die Drosselklappen sind im Gehäuse im geschlossenen Zustand des Abgasrückführkanals derart angeordnet, dass die Klappen außerhalb des Durchströmquerschnitts des Luftkanals in einer Wanne angeordnet sind. Über die Wanne wird anfallendes Kondensat zum Abgaskanal geleitet. Das zum Abgaskanal geleitete Kondensat strömt bei Öffnung des Kanals in den Abgaskanal. Dort wird das Kondensat verdampft und strömt mit dem Abgas als Wasserdampf in den Luftkanal. Eine solche Klappe ist auch aus der EP 3 012 445 A1 bekannt.

Zusätzlich ist aus der DE 10 2014 222 240 A1 eine einen Strömungskanal beherrschende Klappe bekannt, deren Oberfläche mit einer hydrophilen oder einer hydrophoben Beschichtung versehen werden kann. Während bei der hydrophoben Beschichtung ein Anhaften von Wasser vollständig verhindert werden soll, soll durch die hydrophile Beschichtung ein Abfließen des Wassers von der Klappe sichergestellt werden, um einen Wasserfilm auf der Klappe zu minimieren.

Das an dem Abgaskanal gesammelte Kondensat kann bei einem Neustart des Motors als Eis vorliegen, so dass die zweite Drosselklappe, welche den Abgaskanal verschließt, mit einem Ventilsitz des Abgaskanals festgefroren sein kann. Ein Lösen der zweiten Drosselklappe ist dann erst bei Betriebstemperatur des Motors möglich. Eine Regelung durch die Regelvorrichtung ist somit während der Kaltstartphase nicht möglich.

Die Aufgabe der vorliegenden Erfindung liegt somit darin, eine Regelvorrichtung zu schaffen, mit welcher eine sichere Funktion der Regelvorrichtung gewährleistet wird und dennoch keine Kondensattropfen in den Verdichter gelangen.

Diese Aufgabe wird durch eine Regelvorrichtung mit den Merkmalen der Ansprüche 1, 2 und 3 gelöst. Bei der erfindungsgemäßen Regelvorrichtung ist in der zweiten Endstellung des Regelkörpers an einer zum Abgasrückführkanal gewandten Oberfläche des Regelkörpers eine Wasser speichernde Beschichtung angeordnet. Unter einer Wasser speichernden Beschichtung wird gemäß der vorliegenden Erfindung eine Beschichtung verstanden, welche das an der kalten Klappe anfallende Kondensat speichert, so dass keine Tropfen mitgerissen werden können. Die Wasser speichernde Beschichtung speichert das Kondensat bis Abgas mit einer ausreichenden Temperatur anliegt, so dass das Kondensat verdunstet wird. In einer Stellung des Regelkörpers, bei welcher der Abgasrückführkanal geöffnet und der Ansaugkanal gedrosselt wird, kann die Beschichtung durch das Abgas derart erhitzt werden, dass das darin gespeicherte Kondensat verdunstet wird. Dadurch bleibt die Beschichtung weiterhin aufnahmefähig für Kondensat. Ein Mitreißen von Kondensattropfen durch den Strom kann somit auch dauerhaft vermieden werden. Durch das Speichern des Kondensats in der Wasser speichernden Beschichtung wird vermieden, dass sich Kondensat am Ventilsitz des Abgasrückführkanal sammelt. Dadurch friert der Regelkörper nicht fest, so dass eine Regelung auch in einer Kaltstartphase des Motors möglich ist. Der Regelkörper weist in einer erfindungsgemäßen Ausführung (Anspruch 1) eine einzige

Regelklappe auf, an welcher die Beschichtung angeordnet ist, wobei ein Kontaktbereich der Regelklappe mit dem Ventilsitz des Abgasrückführkanals von der Beschichtung ausgespart ist. Eine einzige Regelklappe hat den Vorteil, dass der Regelkörper sehr wirtschaftlich herstellbar ist. Darüber hinaus sind keine weiteren Elemente des Regelkörpers vorhanden, an denen sich Kondensat bilden könnte, welche nicht mit einer Beschichtung versehen sind.

Alternativ weist der Regelkörper eine erste Klappe, die den Ansaugkanal verschließt, und eine an der ersten Klappe befestigte zweite Klappe, die den Abgasrückführkanal drosselt, auf. Durch die Ausführung mit zwei Klappen kann die Anordnung der Ventilsitze zueinander mit deutlich ungenaueren Toleranzen erfolgen. Des Weiteren kann der Regelkörper vollständig aus dem durchströmten Bereich des Luftansaugkanals herausgedreht werden. Dabei ist die Beschichtung entweder an der ersten Klappe angeordnet (Anspruch 2), so dass aufgrund des direkten Kontaktes der ersten Klappe mit dem kühlen Luftstrom eine Kondensationsneigung des Abgases an dieser Klappe am größten ist, wodurch sich an dieser Klappe bildende Kondensationstropfen, welche vom Luftstrom mitgerissen werden können, vermieden werden können, oder alternativ ist die Beschichtung an der zweiten Klappe angeordnet (Anspruch 3), wobei ein Kontaktbereich der zweiten Klappe mit dem Ventilsitz des Abgasrückführkanals von der Beschichtung ausgespart ist. Die zweite Klappe ist direkt oberhalb der Mündung des Abgasrückführkanals angeordnet, so dass das heiße Abgas zuerst direkt auf diese Klappe trifft. Das an der zweiten Klappe kondensierende Wasser kann somit in der Beschichtung gespeichert werden. Um in der zweiten Endstellung eine gute Dichtwirkung zwischen Klappe und Ventilsitz des Abgasrückführkanals zu erzielen, ist die Beschichtung in einem Kontaktbereich der zweiten Klappe mit dem Ventilsitz des Abgasrückführkanals ausgespart.

In einer bevorzugten Ausführungsform der Erfindung ist die Welle außerhalb des Durchströmungsquerschnittes angeordnet. Gemäß der vorliegenden Erfindung ist der Durchströmungsquerschnitt der Querschnitt im Gehäuse, welcher von dem Luftstrom aus dem Ansaugkanal hauptsächlich durchströmt wird. Durch diese Anordnung kann der Luftstrom, insbesondere in einer zweiten Endstellung des Regelkörpers, in welcher der Regelkörper an dem Ventilsitz des Abgasrückführkanal anliegt, ungehindert zum Verdichter strömen.

In einer weiteren bevorzugten Ausführungsform ist der Regelkörper exzentrisch an der Welle befestigt. Durch eine exzentrische Anordnung des Regelkörpers zur Welle, kann die Welle beabstandet zum Regelkörper angeordnet werden. Dadurch kann die Welle variable zum Regelkörper im Gehäuse positioniert werden. Beispielsweise ist dadurch eine Anordnung möglich, bei welcher die Welle außerhalb des Durchströmungsquerschnittes angeordnet ist.

Bei einer bevorzugten Ausgestaltung der Erfindung liegt der Regelkörper in der ersten Endstellung, in welcher der Regelkörper den Ansaugkanal verschließt, an einem Ansaugkanal-Ventilsitz an. Dadurch kann eine vollständige Regelung des Luftstromes durchgeführt werden.

Vorzugsweise ist die Beschichtung aus einem Schaum gebildet. Ein Schaum ist einfach auf eine definierte Oberfläche aufzubringen. Zudem besitzt ein Schaum gute Eigenschaften zur Aufnahme des Kondensats. Der Schaum hat zudem eine isolierende Wirkung zur kalten Seite der Klappe, so dass die Bildung von Kondensat am kalten Klappenkörper vermindert wird. Besonders bevorzugt ist der Schaum, Melaminharzschaum. Dieser Schaum besitzt gute Kondensatspeicherfähigkeiten und ist auch sehr beständig bei einer aggressiven Umgebung, wie es bei einem Abgasrückführventil vorherrscht. Der Melaminharzschaum weist damit auch eine lange Haltbarkeit auf.

In einer weiteren bevorzugten Ausführungsform ist die Beschichtung an der ersten Klappe und an der zweiten Klappe angeordnet, wobei ein Kontaktbereich der zweiten Klappe mit dem Ventilsitz des Abgasrückführkanals von der Beschichtung ausgespart ist. Dadurch wird jede Klappe, an welcher sich Kondensationstropfen bilden können, mit der Beschichtung versehen. Somit wird die Bildung von Kondensationstropfen nochmals vermindert. Um in der zweiten Endstellung eine gute Dichtwirkung zwischen Klappe und Ventilsitz des Abgasrückführkanals zu erzielen, ist auch hier die Beschichtung in einem Kontaktbereich der zweiten Klappe mit dem Ventilsitz des Abgasrückführkanals ausgespart.

Die erfindungsgemäße Regelvorrichtung hat somit den Vorteil, dass das Kondensat so lange gespeichert wird, bis eine ausreichende Temperatur zum Verdampfen vorhanden ist, so dass eine Beschädigung des Verdichters vermieden wird.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
- Figur 1:: Seitenansicht einer erfindungsgemäßen Regelvorrichtung mit einem Regelkörper in einer ersten Endstellung in geschnittener Darstellung,

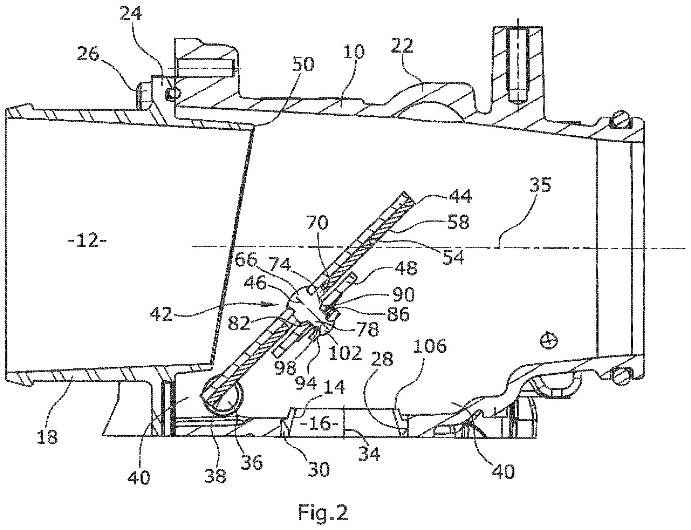

- Figur 2:: Seitenansicht der erfindungsgemäßen Regelvorrichtung aus Figur 1 mit einem Regelkörper in einer Mittelposition in geschnittener Darstellung,
- Figur 3:: Seitenansicht der erfindungsgemäßen Regelvorrichtung aus Figur 1 mit einem Regelkörper in einer zweiten Endstellung in geschnittener Darstellung, und
- Figur 4:: Seitenansicht der Regelvorrichtung nach einem zweiten Ausführungsbeispiel mit einem Regelkörper in einer Mittelposition in geschnittener Darstellung.

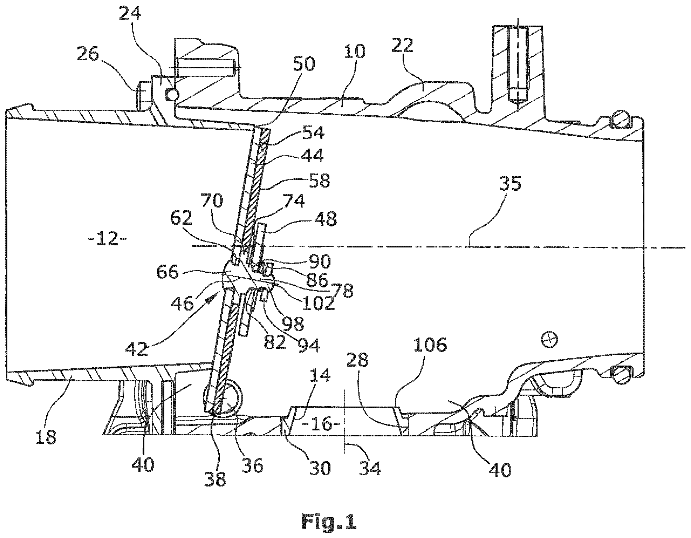

Figur 1 zeigt eine Regelvorrichtung nach einem ersten Ausführungsbeispiel. Die erfindungsgemäße Regelvorrichtung besteht aus einem Gehäuse 10, welches einen Ansaugkanal 12 begrenzt und in dem eine Mündung 14 eines Abgasrückführkanals 16 ausgebildet ist. Der Ansaugkanal 12 verläuft im Wesentlichen in gerader Richtung, während der Abgasrückführkanal 16 senkrecht zum Ansaugkanal 12 in diesen mündet.

Das Gehäuse 10 besteht aus einem ersten im Wesentlichen rohrförmig ausgebildeten Gehäuseteil 18. Dieses erste Gehäuseteil 18 ist im Innern eines zweiten Gehäuseteils 22 angeordnet, beziehungsweise wird in das zweite Gehäuseteil 22 bis zur Anlage eines Flansches 24 eingeschoben, über den das erste Gehäuseteil 18 mittels Schrauben 26 am zweiten Gehäuseteil 22 befestigt ist. Das zweite Gehäuseteil 22 weist eine Öffnung 28 auf, welche in Strömungsrichtung in kurzem Abstand hinter einem axialen Ende des ersten Gehäuseteils 18 angeordnet ist und welches als Aufnahme für ein drittes Gehäuseteil 30 dient, welches die Mündung 14 des Abgasrückführkanals 16 bildet, dessen Mittelachse 34 senkrecht zur Mittelachse 35 des Ansaugkanals 12 angeordnet ist.

Im Gehäuse 10 ist eine Welle 36 drehbar angeordnet, die über einen nicht sichtbaren Aktor betätigt werden kann. Die Drehachse 38 dieser Welle 36 ist senkrecht zu den Mittelachsen 34, 35 angeordnet und befindet sich zwischen der zur Welle 36 stromabwärtigen Mündung 14 des Abgasrückführkanals 16 und dem axialen Ende des ersten Gehäuseteils 18 und unmittelbar stromabwärts des ersten Gehäuseteils 18. Der Durchströmungsquerschnitt des ersten Gehäuseteils 18 ist kleiner als der des zweiten Gehäuseteils 22 des Ansaugkanals 12, wobei das erste Gehäuseteil 18 derart am zweiten Gehäuseteil 22 befestigt ist, dass eine im Bereich der Mündung des Abgasrückführkanals 16 ausgebildete Ausnehmung 40 außerhalb des Durchströmungsquerschnitts angeordnet ist, in der die Welle 36, das zweite Gehäuseteil 22 durchdringend, angeordnet ist.

An dieser exzentrisch im Ansaugkanal 12 angeordneten Welle 36 ist ein Regelkörper 42 befestigt, der aus einer ersten Klappe 44 sowie einer über eine Halteachse 46 an der ersten Klappe 44 befestigten zweiten Klappe 48 besteht. Die erste Klappe 44 erstreckt sich gerade von der Welle 36 aus und beherrscht den Durchströmungsquerschnitt des Ansaugkanals 12. Hierzu wirkt die erste Klappe 44 mit dem axialen Ende des ersten Gehäuseteils 18 zusammen, das als Ansaugkanal-Ventilsitz 50 dient, auf dem die erste Klappe 44 im den Ansaugkanal 12 verschließenden Zustand, wie er in Figur 1 dargestellt ist, anliegt.

In einer zweiten Endstellung des Regelkörpers 42 in der die zweite Klappe 48 auf einem Ventilsitz 106 des Abgasrückführkanal 16 aufliegt, ist auf einer zum Abgasrückführkanal 16 gewandte Oberfläche 54 der ersten Klappe 44 eine Wasser speichernde Beschichtung 58 angeordnet. Die Wasser speichernde Beschichtung 58 kommt somit in einer Stellung des Regelkörpers 42 zwischen der ersten und der zweiten Endstellung direkt mit dem heißen Abgas aus dem Abgasrückführkanal 16 in Kontakt. Wasser aus dem Abgas, welches an der kühleren ersten Klappe 44 kondensiert wird somit in der Wasser speichernden Beschichtung 58 zwischengespeichert. Bei Öffnung des Abgaskanals strömt Abgas gegen diese Klappenseite und heizt die Wasser speichernde Beschichtung 58 derart auf, dass das darin gespeicherte Wasser wieder aus der Beschichtung 58 abgegeben wird.

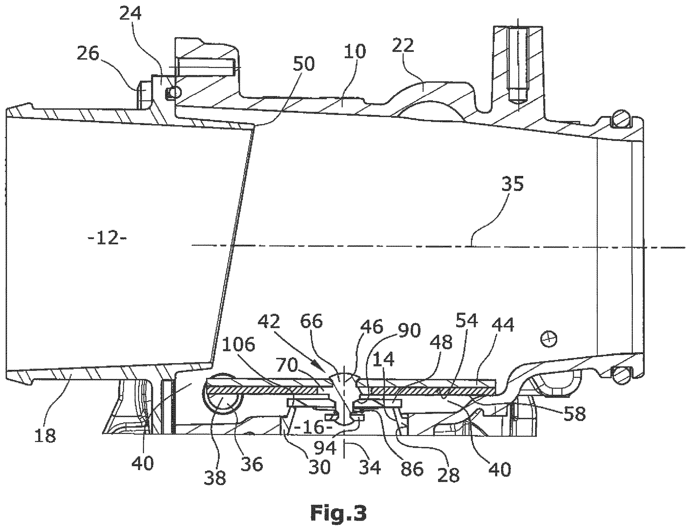

In der ersten Klappe 44 ist im zentralen Bereich eine Bohrung 62 ausgebildet, in der die Halteachse 46 befestigt ist. Diese erstreckt sich zur zum ersten Gehäuseteil 18 gegenüberliegenden Seite senkrecht zur ersten Klappe 44. Die Halteachse 46 weist mehrere axial hintereinanderliegende Abschnitte unterschiedlicher Durchmesser auf, von denen ein erster Abschnitt 66 die Bohrung 62 durchdringt und im hinteren Bereich zur Erzeugung einer Nietverbindung umgeformt ist und der zweite, größere Abschnitt 70 flächig gegen die erste Klappe 44 anliegt. Ein dritter axialer Abschnitt 74 weist einen kleineren Durchmesser als der zweite Abschnitt 70 auf, gefolgt von einem vierten Abschnitt 78 mit wiederum verkleinertem Durchmesser. Auf diesem vierten Abschnitt 78 ist die zweite Klappe 48 angeordnet, welche eine zentrale Öffnung 82 aufweist, durch die die Halteachse 46 dringt, wobei der Durchmesser dieser Öffnung 82 etwas größer ist als der Durchmesser des vierten Abschnitts 78, wodurch die zweite Klappe 48 auf der Halteachse 46 leicht gekippt werden kann. Eine Feder 86 umgibt ebenfalls den vierten Abschnitt 78 und drückt die Klappe 48 gegen einen als Anschlag 90 dienenden kugeligen Absatz zwischen dem dritten Abschnitt 74 und dem vierten Abschnitt 78. Als Widerlager für diese Feder 86 dient eine Scheibe 94, welche auf einem fünften Abschnitt 98 der Halteachse 46 angeordnet ist, wo sie durch Umformen, eines die Scheibe 94 durchdringenden folgenden Abschnitts 102 der Halteachse 46 befestigt wird. Diese Befestigung der zweiten Klappe 48 führt dazu, dass bei Drehung der Welle 36 in der zweite Endstellung, wie sie in Figur 3 dargestellt ist, in der die zweite Klappe 48 auf der als Ventilsitz 106 dienenden Mündung 14 des Abgasrückführkanals 16 aufliegt, ein vollständiger dichter Verschluss des Abgasrückführkanals 16 erfolgt, da die Klappe 48 ihre Stellung durch die mögliche Kippbewegung an die Lage des Ventilsitzes 106 des Abgasrückführkanals 16 anpassen kann, auch wenn dieser nicht vollständig parallel zur Mittelachse 35 des Ansaugkanals 12 ausgebildet ist.

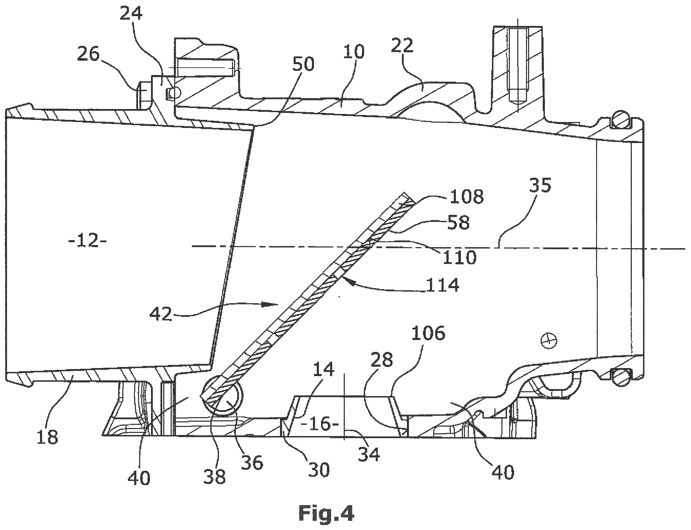

Figur 4 zeigt eine Regelvorrichtung nach einem zweiten Ausführungsbeispiel mit dem Regelkörper 42 in einer Mittelposition. In der folgenden Beschreibung werden für gleichwirkende Teile gleiche Bezugszeichen verwendet. Diese Regelvorrichtung unterscheidet sich von der Regelvorrichtung aus dem ersten Ausführungsbeispiel dadurch, dass der Regelkörper 42 lediglich eine einzige Regelklappe 108 aufweist. Diese Regelklappe 108 kann sowohl den Abgasrückführkanals 16 als auch den Ansaugkanals 12 verschließen. Bei dem zweiten Ausführungsbeispiel ist die Beschichtung 58 auf einer dem Abgasrückführkanals 16 zugewandten Oberfläche 110 der Regelklappe 108 angeordnet. Ein Kontaktbereich 114 der Oberfläche 110 der Regelklappe 108, welcher in einer zweiten Endstellung in Kontakt mit dem Ventilsitz 106 des Abgasrückführkanals 16 ist, ist von der Beschichtung 58 ausgenommen.

Es sollte deutlich sein, dass der Schutzbereich der vorliegenden Anmeldung nicht auf die beschriebenen Ausführungsbeispiele beschränkt ist. Insbesondere sind verschiedene Modifikationen bezüglich des Zusammenbaus und der Ausformung der Gehäuseteile und der beiden Klappen denkbar.

### Bezugszeichenliste

- 10: Gehäuse
- 12: Ansaugkanal
- 14: Mündung
- 16: Abgasrückführkanal
- 18: erste Gehäuseteil
- 22: zweite Gehäuseteil
- 24: Flansch
- 26: Schrauben
- 28: Öffnung
- 30: drittes Gehäuseteil
- 34: Mittelachse Abgasrückführkanal
- 35: Mittelachse Ansaugkanal
- 36: Welle
- 38: Drehachse
- 40: Ausnehmung
- 42: Regelkörper
- 44: erste Klappe
- 46: Halteachse
- 48: zweite Klappe
- 50: Ansaugkanal-Ventilsitz
- 54: Oberfläche
- 58: Beschichtung
- 62: Bohrung
- 66: erster Abschnitt
- 70: zweite Abschnitt
- 74: dritter Abschnitt
- 78: vierten Abschnitt
- 82: zentrale Öffnung
- 86: Feder
- 90: Anschlag
- 94: Scheibe
- 98: fünfter Abschnitt
- 102: Abschnitt
- 106: Ventilsitz
- 108: Regelklappe
- 110: Oberfläche
- 114: Kontaktbereich

## Patentansprüche

1. Regelvorrichtung für eine Verbrennungskraftmaschine mit
- einem Ansaugkanal (12),
- einem Abgasrückführkanal (16), der in den Ansaugkanal (12) mündet,
- einem Gehäuse (10), in dem der Ansaugkanal (12) und zumindest eine Mündung (14) des Abgasrückführkanals (16) ausgebildet sind,
- einer als Drehachse (38) dienenden Welle (36), die im Gehäuse (10) bezüglich des Luftstroms stromaufwärts der Mündung (14) des Abgasrückführkanals (16) und senkrecht zu den Mittelachsen (34, 35) des Ansaugkanals (12) und des Abgasrückführkanals (16) angeordnet ist,
- einem Regelkörper (42), der an der Welle (36) befestigt ist, über die der Regelkörper (42) im Ansaugkanal (12) drehbar ist, wobei der Regelkörper (42) in einer ersten Endstellung den Ansaugkanal (12) zumindest drosselt, und in einer zweiten Endstellung an einem Ventilsitz (106) anliegt, in welcher der Regelkörper (42) den Abgasrückführkanal (16) verschließt,
**dadurch gekennzeichnet, dass**
in der zweiten Endstellung des Regelkörpers (42) an einer zum Abgasrückführkanal (16) gewandten Oberfläche (54, 110) des Regelkörpers (42) eine Wasser speichernde Beschichtung (58) angeordnet ist und der Regelkörper (42) eine einzige Regelklappe (108) aufweist, an welcher die Beschichtung (58) angeordnet ist, wobei ein Kontaktbereich (114) der Regelklappe (108) mit dem Ventilsitz (106) des Abgasrückführkanals (16) von der Beschichtung (58) ausgespart ist.

2. Regelvorrichtung für eine Verbrennungskraftmaschine mit
- einem Ansaugkanal (12),
- einem Abgasrückführkanal (16), der in den Ansaugkanal (12) mündet,
- einem Gehäuse (10), in dem der Ansaugkanal (12) und zumindest eine Mündung (14) des Abgasrückführkanals (16) ausgebildet sind,
- einer als Drehachse (38) dienenden Welle (36), die im Gehäuse (10) bezüglich des Luftstroms stromaufwärts der Mündung (14) des Abgasrückführkanals (16) und senkrecht zu den Mittelachsen (34, 35) des Ansaugkanals (12) und des Abgasrückführkanals (16) angeordnet ist,
- einem Regelkörper (42), der an der Welle (36) befestigt ist, über die der Regelkörper (42) im Ansaugkanal (12) drehbar ist, wobei der Regelkörper (42) in einer ersten Endstellung den Ansaugkanal (12) zumindest drosselt, und in einer zweiten Endstellung an einem Ventilsitz (106) anliegt, in welcher der Regelkörper (42) den Abgasrückführkanal (16) verschließt,
**dadurch gekennzeichnet, dass**
in der zweiten Endstellung des Regelkörpers (42) an einer zum Abgasrückführkanal (16) gewandten Oberfläche (54, 110) des Regelkörpers (42) eine Wasser speichernde Beschichtung (58) angeordnet ist und der Regelkörper (42) eine erste Klappe (44), die den Ansaugkanal (12) drosselt, und eine an der ersten Klappe (44) befestigte zweite Klappe (48), die den Abgasrückführkanal (16) verschließt, aufweist, wobei die Beschichtung (58) an der ersten Klappe (44) angeordnet ist.

3. Regelvorrichtung für eine Verbrennungskraftmaschine mit
- einem Ansaugkanal (12),
- einem Abgasrückführkanal (16), der in den Ansaugkanal (12) mündet,
- einem Gehäuse (10), in dem der Ansaugkanal (12) und zumindest eine Mündung (14) des Abgasrückführkanals (16) ausgebildet sind,
- einer als Drehachse (38) dienenden Welle (36), die im Gehäuse (10) bezüglich des Luftstroms stromaufwärts der Mündung (14) des Abgasrückführkanals (16) und senkrecht zu den Mittelachsen (34, 35) des Ansaugkanals (12) und des Abgasrückführkanals (16) angeordnet ist,
- einem Regelkörper (42), der an der Welle (36) befestigt ist, über die der Regelkörper (42) im Ansaugkanal (12) drehbar ist, wobei der Regelkörper (42) in einer ersten Endstellung den Ansaugkanal (12) zumindest drosselt, und in einer zweiten Endstellung an einem Ventilsitz (106) anliegt, in welcher der Regelkörper (42) den Abgasrückführkanal (16) verschließt,
**dadurch gekennzeichnet, dass**
in der zweiten Endstellung des Regelkörpers (42) an einer zum Abgasrückführkanal (16) gewandten Oberfläche (54, 110) des Regelkörpers (42) eine Wasser speichernde Beschichtung (58) angeordnet ist und der Regelkörper (42) eine erste Klappe (44), die den Ansaugkanal (12) drosselt, und eine an der ersten Klappe (44) befestigte zweite Klappe (48), die den Abgasrückführkanal (16) verschließt, aufweist, wobei die Beschichtung (58) an der zweiten Klappe (48) angeordnet ist und ein Kontaktbereich (114) der zweiten Klappe (48) mit dem Ventilsitz (106) des Abgasrückführkanals (16) von der Beschichtung (58) ausgespart ist.

4. Regelvorrichtung nach einem der vorhergehenden Ansprüche, **dadurch gekennzeichnet, dass** die Welle (36) außerhalb des Durchströmungsquerschnittes angeordnet ist.

5. Regelvorrichtung nach einem der vorhergehenden Ansprüche, **dadurch gekennzeichnet, dass** der Regelkörper (42) exzentrisch an der Welle (36) befestigt ist.

6. Regelvorrichtung nach einem der vorhergehenden Ansprüche, **dadurch gekennzeichnet, dass** der Regelkörper (42) in der ersten Endstellung, in welcher der Regelkörper (42) den Ansaugkanal (12) verschließt, an einem Ansaugkanal-Ventilsitz (50) anliegt.

7. Regelvorrichtung nach einem der vorhergehenden Ansprüche, **dadurch gekennzeichnet, dass** die Beschichtung (58) aus einem Schaum gebildet ist.

8. Regelvorrichtung nach Anspruch 7, **dadurch gekennzeichnet, dass** der Schaum, Melaminharzschaum ist.

9. Regelvorrichtung nach einem der Ansprüche 2, 3 oder 4-8, wenn dieser von 2 oder 3 abhängt, **dadurch**
**gekennzeichnet, dass** die Beschichtung (58) an der ersten Klappe (44) und an der zweiten Klappe (48) angeordnet ist, wobei ein Kontaktbereich (114) der zweiten Klappe (48) mit dem Ventilsitz (106) des Abgasrückführkanals (16) von der Beschichtung (58) ausgespart ist.

## Claims

1. Control device for an internal combustion engine with
- an intake channel (12),
- an exhaust gas recirculation channel (16) which opens into the intake channel (12)
- a housing (10) in which the intake channel (12) and at least one opening (14) of the exhaust gas recirculation channel (16) are configured
- a shaft (36) serving as an axis of rotation (38), which is arranged in the housing (10) upstream of the opening (14) of the exhaust gas recirculation channel (16) with respect to the air flow and perpendicular to the center axes (34, 35) of the intake channel (12) and the exhaust gas recirculation channel (16)
- a control body (42) which is attached to the shaft (36) via which the control body (42) can be rotated in the intake channel (12), the control body (42) at least throttling the intake channel (12) in a first end position and bearing against a valve seat (106) in a second end position, in which the control body (42) closes the exhaust gas recirculation channel (16)
**characterized in that**
in the second end position of the control body (42), a water-storing coating (58) is arranged on a surface (54, 110) of the control body (42) facing the exhaust gas recirculation channel (16), and the control body (42) comprises a single control flap (108) on which the coating (58) is arranged, at a contact region (114) of the control flap (108) with the valve seat (106) of the exhaust gas recirculation channel (16) the coating (58) is recessed.

2. Control device for an internal combustion engine having
- an intake channel (12),
- an exhaust gas recirculation channel (16) which opens into the intake channel (12)
- a housing (10) in which the intake channel (12) and at least one opening (14) of the exhaust gas recirculation channel (16) are configured
- a shaft (36) serving as an axis of rotation (38), which is arranged in the housing (10) upstream of the opening (14) of the exhaust gas recirculation channel (16) with respect to the air flow and perpendicular to the central axes (34, 35) of the intake channel (12) and of the exhaust gas recirculation channel (16)
- a control body (42) which is attached to the shaft (36) via which the control body (42) can be rotated in the intake channel (12), the control body (42) at least throttling the intake channel (12) in a first end position and bearing against a valve seat (106) in a second end position, in which the control body (42) closes the exhaust gas recirculation channel (16)
**characterized in that**
in the second end position of the control body (42), a water-storing coating (58) is arranged on a surface (54, 110) of the control body (42) facing the exhaust gas recirculation channel (16), and the control body (42) comprises a first flap (44), which throttles the intake channel (12), and a second flap (48), which is attached to the first flap (44) and closes the exhaust gas recirculation channel (16), the coating (58) being arranged on the first flap (44).

3. Control device for an internal combustion engine having
- an intake channel (12),
- an exhaust gas recirculation channel (16) which opens into the intake channel (12)
- a housing (10) in which the intake channel (12) and at least one opening (14) of the exhaust gas recirculation channel (16) are configured
- a shaft (36) serving as an axis of rotation (38), which is arranged in the housing (10) upstream of the opening (14) of the exhaust gas recirculation channel (16) with respect to the air flow and perpendicular to the central axes (34, 35) of the intake channel (12) and of the exhaust gas recirculation channel (16)
- a control body (42) which is attached to the shaft (36) via which the control body (42) can be rotated in the intake channel (12), the control body (42) at least throttling the intake channel (12) in a first end position and bearing against a valve seat (106) in a second end position, in which the control body (42) closes the exhaust gas recirculation channel (16)
**characterized in that**
in the second end position of the control body (42), a water-storing coating (58) is arranged on a surface (54, 110) of the control body (42) facing the exhaust gas recirculation channel (16), and the control body (42) has a first flap (44) which throttles the intake channel (12) and a second flap (48) which is attached to the first flap (44) and closes the exhaust gas recirculation channel (16), the coating (58) being arranged on the second flap (48) and at a contact region (114) of the second flap (48) with the valve seat (106) of the exhaust gas recirculation channel (16) the coating (58) is recessed.

4. Control device according to one of the preceding claims, **characterized in that** the shaft (36) is arranged outside the throughflow cross section.

5. Control device according to one of the preceding claims, **characterized in that** the control body (42) is eccentrically attached to the shaft (36).

6. Control device according to one of the preceding claims, **characterized in that** the control body (42) rests against an intake channel valve seat (50) in the first end position, in which the control body (42) closes the intake channel (12).

7. Control device according to one of the preceding claims, **characterized in that** the coating (58) is defined by a foam.

8. Control device according to claim 7, **characterized in that** the foam is a melamine resin foam.

9. Control device according to one of claims 2, 3 or 4-8, if it depends on claim 2 or 3, **characterized in that** the coating (58) is arranged on the first flap (44) and on the second flap (48), at a contact region (114) of the second flap (48) with the valve seat (106) of the exhaust gas recirculation channel (16) the coating (58) is recessed.

## Revendications

1. Appareil de contrôle pour un moteur à combustion interne comprenant
- un canal en entrée (12),
- un canal en entrée (16) de recirculation des gaz d'échappement qui s'ouvre dans le canal en entrée (12)
- un boîtier (10) dans lequel le canal en entrée (12) et au moins une ouverture (14) du canal de recirculation des gaz d'échappement (16) sont configurés
- un arbre (36) servant d'axe de rotation (38), qui est disposé dans le boîtier (10) en amont de l'ouverture (14) du canal de recirculation des gaz d'échappement (16) par référence au flux d'air et perpendiculairement aux axes centraux (34, 35) du canal en entrée (12) et du canal de recirculation des gaz d'échappement (16)
- un corps de contrôle (42) qui est fixé à l'arbre (36) par l'intermédiaire duquel le corps de contrôle (42) peut être tourné dans le canal en entrée (12), le corps de contrôle (42) obture au moins le canal en entrée (12) dans une première position d'extrémité et palier contre un seat de vanne (106) dans une seconde position terminale, dans laquelle le corps de contrôle (42) ferme le canal en recirculation des gaz d'échappement (16)
**caractérisé en ce que**
dans la deuxième position terminale du corps de contrôle (42), un revêtement d'accumulation d'eau (58) est disposé sur une surface (54, 110) du corps de contrôle (42) tournée vers le canal de recirculation des gaz d'échappement (16), et le corps de contrôle (42) comprend un seul clapet de contrôle (108) sur lequel le revêtement (58) est disposé, le revêtement (58) est en retrait dans une zone de contact (114) du clapet de contrôle (108) avec le seat de soupape (106) du canal de recirculation des gaz d'échappement (16).

2. Appareil de contrôle pour un moteur à combustion interne, comprenant
- un canal en entrée (12),
- un canal en entrée (16) de recirculation des gaz d'échappement qui s'ouvre dans le canal en entrée (12)
- un boîtier (10) dans lequel le canal en entrée (12) et au moins une ouverture (14) du canal de recirculation des gaz d'échappement (16) sont réalisés
- un arbre (36) servant d'axe de rotation (38), qui est disposé dans le boîtier (10) en amont de l'ouverture (14) du canal de recirculation des gaz d'échappement (16) par rapport au flux d'air et perpendiculairement aux axes centraux (34, 35) du canal en entrée (12) et du canal de recirculation des gaz d'échappement (16)
- un corps de contrôle (42) qui est fixé à l'arbre (36) par l'intermédiaire duquel le corps de contrôle (42) peut tourner dans le canal en entrée (12), le corps de contrôle (42) étranglant au moins le canal en entrée (12) dans une première position d'extrémité et palier contre un seat de vanne (106) dans une seconde position terminale, dans laquelle le corps de contrôle (42) ferme le canal en entrée (16) des gaz d'échappement
**caractérisé en ce que**
dans la deuxième position terminale du corps de contrôle (42), un revêtement de stockage d'eau (58) est disposé sur une surface (54, 110) du corps de contrôle (42) faisant face au canal en entrée (16), et le corps de contrôle (42) comprend un premier clapet (44), qui étrangle le canal en entrée (12), et un deuxième clapet (48), qui est attaché au premier clapet (44) et ferme le canal en entrée (16), le revêtement (58) étant disposé sur le premier clapet (44).

3. Appareil de contrôle pour un moteur à combustion interne comprenant
- un canal en entrée (12),
- un canal en entrée (16) de recirculation des gaz d'échappement qui ouvre dans le canal d'entrée (12)
- un boîtier (10) dans lequel le canal en entrée (12) et au moins une ouverture (14) du canal de recirculation des gaz d'échappement (16) sont configurés
- un arbre (36) servant d'axe de rotation (38), qui est disposé dans le boîtier (10) en amont de l'ouverture (14) du canal de recirculation des gaz d'échappement (16) par référence au flux d'air et perpendiculairement aux axes centraux (34, 35) du canal en entrée (12) et du canal de recirculation des gaz d'échappement (16)
- un corps de contrôle (42) qui est fixé à l'arbre (36) par l'intermédiaire duquel le corps de contrôle (42) peut être tourné dans le canal en entrée (12), le corps de contrôle (42) réduise au moins le canal en entrée (12) dans une première position terminale et palier contre un seat de vanne (106) dans une seconde position terminale, dans laquelle le corps de contrôle (42) ferme le canal en entrée (16) des gaz d'échappement **caractérisé en ce que**
dans la deuxième position terminale du corps de contrôle (42), un revêtement de stockage d'eau (58) est disposé sur une surface (54, 110) du corps de contrôle (42) faisant face au canal de recirculation des gaz d'échappement (16), et le corps de contrôle (42) a un premier clapet (44) pour réduire le canal en entrée (12) et un deuxième clapet (48) qui est attaché au premier clapet (44) et ferme le canal en recirculation des gaz d'échappement (16), le revêtement (58) étant disposé sur le deuxième clapet (48) et le revêtement (58) étant en retrait dans une zone de contact (114) du deuxième clapet (48) avec le seat de vanne (106) du canal de recirculation des gaz d'échappement (16).

4. Appareil de contrôle selon l'une des revendications précédentes, **caractérisé en ce que** l'arbre (36) est disposé à l'extérieur de la section de passage.

5. Appareil de contrôle selon l'une des revendications précédentes, **caractérisé en ce que** le corps de contrôle (42) est fixé de manière excentrée à l'arbre (36).

6. Appareil de contrôle selon l'une des revendications précédentes, **caractérisé en ce que** le corps de contrôle (42) repose contre un seat de vanne de canal en entrée (50) dans la première position terminale, dans laquelle le corps de contrôle (42) ferme le canal en entrée (12).

7. Appareil de contrôle selon l'une des revendications précédentes, **caractérisé en ce que** le revêtement (58) est défini par une mousse.

8. Appareil de contrôle selon la revendication 7, **caractérisé en ce que** la mousse est une mousse de résine mélamine.

9. Appareil de contrôle selon l'une des revendications 2, 3 ou 4-8, s'il dépend de la revendication 2 ou 3, **caractérisé en ce que** le revêtement (58) est disposé sur le premier clapet (44) et sur le deuxième clapet (48), au niveau d'une zone de contact (114) du deuxième clapet (48) avec le seat de vanne (106) du canal de recirculation des gaz d'échappement (16), le revêtement (58) est en retrait.
